# FASCICULE DE BREVET EUROPEEN

(11) **EP 4 695 862 B1**
(45) Date de publication et mention de la délivrance du brevet: **27.05.2026**
(21) Numéro de dépôt: 25733504.2
(22) Date de dépôt: 16.06.2025
(51) Int. Cl.: H01M 50/503, H01M 50/105, H01M 50/117, H01M 50/211, H01M 50/516, H01M 50/522, H01M 50/548, H01M 50/172

(54) **CELLULES ÉLECTROCHIMIQUES ET MODULES DE BATTERIE ET BATTERIES INTÉGRANT DE TELLES CELLULES**
ELEKTROCHEMISCHE ZELLEN UND BATTERIEMODULE SOWIE BATTERIEN MIT SOLCHEN ZELLEN
ELECTROCHEMICAL CELLS AND BATTERY MODULES AND BATTERIES INCORPORATING SUCH CELLS

(30) Priorité: 19.06.2024 FR 2406578
(43) Date de publication de la demande: 18.02.2026
(73) Titulaire: Verkor, 38000 Grenoble (FR)
(72) Inventeur: TANGHE, Adrien, 38000 Grenoble (FR); BINTI MAHMUD, Naimah Noor, 38000 Grenoble (FR); CHANG, Wei Kang, 38000 Grenoble (FR); MARES-MANTON, Jordan Alexander, 38000 Grenoble (FR)
(74) Mandataire: Novagraaf Group
(86) Numéro de dépôt international: PCT/IB2025/056130
(87) Numéro de publication internationale: WO 2025/262565

(56) Documents cités:
- WO-A2-2014/054888
- US-A1- 2013 330 595
- US-A1- 2017 365 887

## Description

La présente invention a trait aux cellules électrochimiques, et plus particulièrement à la connexion électrique de telles cellules dans un module de batterie ou dans une batterie électrique destinée à équiper un véhicule automobile au moins partiellement alimenté en énergie de propulsion par batterie électrique. L'invention a aussi trait aux modules de batterie, aux blocs-batteries et aux batteries électriques comprenant de telles cellules.

Une batterie électrique destinée à équiper un véhicule hybride ou électrique comprend un accumulateur comportant plusieurs modules ou blocs-batteries intégrant une pluralité de cellules électrochimiques assemblées mécaniquement les unes aux autres dans une ou plusieurs rangées et connectées électriquement entre elles en série ou en parallèle. On entend par batterie électrique un ensemble de cellules électrochimiques assemblées dans une structure de support, soit par regroupement intermédiaire sous forme de modules, soit selon une architecture dite, en anglais, « Cell-To-Pack » (CTP) ou « Cell-To-Chassis » (CTC), dans lesquelles les cellules sont disposées de manière adjacente sans regroupement intermédiaire sous forme de modules. Ce mode d'intégration directe des cellules permet de produire une batterie présentant une compacité accrue, une réduction de masse, ainsi qu'une densité énergétique améliorée par rapport aux architectures traditionnelles comprenant des modules intermédiaires. Ainsi, sauf indication contraire, l'expression «batterie électrique » (qu'il s'agisse d'une batterie CTP, d'une batterie CTC ou d'une batterie à modules, selon le mode d'intégration des cellules) désigne une pluralité de cellules électrochimiques agencées, avec ou sans modules intermédiaires, au sein d'une structure unique. Un module de batterie, ou un bloc-batterie intégrant une pluralité de modules de batterie, assure généralement des fonctions supplémentaires telles que l'encapsulation, la protection mécanique, la surveillance thermique ou électrique, fonctions qui sont absentes ou redistribuées différemment dans les architectures CTP ou CTC.

La connexion électrique entre deux cellules électrochimiques adjacentes d'une même rangée, que ce soit au sein d'un module de batterie ou, plus généralement, d'une batterie électrique, est assurée par une plaque ou barre de liaison électrique, appelée usuellement « busbar » selon une terminologie anglo-saxonne. Cette barre de liaison électrique formée d'un matériau conducteur relie les bornes (ou pôles) de connexion électrique de deux cellules électrochimiques adjacentes. La barre de liaison électrique comporte deux faces principales planes, opposées l'une à l'autre (en vis-à-vis l'une de l'autre), reliées par au moins deux bords latéraux, opposés l'un à l'autre.

Chacune des bornes de connexion électrique se présente sous la forme d'un feuillard métallique flexible ou, plus généralement, d'une languette, communément appelée en anglais « tab », destinée à être pliée contre une face principale de la barre de liaison électrique et y être soudée. En effet, un procédé courant pour connecter électriquement deux cellules électrochimiques adjacentes dans un module de batterie ou dans une batterie électrique consiste à disposer une barre de liaison électrique de sorte qu'elle s'étend entre les deux languettes de connexion électrique en regard de deux cellules électrochimiques adjacentes, à plier ces languettes de connexion électrique sur une même face principale plane de la barre de liaison électrique, et à réaliser des soudures au laser de chaque languette de connexion électrique sur la barre de liaison électrique.

La barre de liaison électrique est prévue suffisamment large (selon une direction de connexion entre les deux cellules électrochimiques perpendiculaire aux plans ou aux empilements des deux cellules adjacentes) pour recevoir les deux bornes de connexion électrique chacune à part et sans chevauchement de l'une sur l'autre. Le plus souvent, la face principale plane de la barre de liaison électrique destinée à recevoir les deux languettes est repartie en deux zones rectangulaires, chacune située du côté d'une cellule. Chacune de ces zones est soudée à la languette de connexion électrique correspondante, c'est-à-dire à celle située du même côté, de sorte à relier électriquement les deux cellules électrochimiques adjacentes, sans chevauchement des deux languettes sur la barre de liaison électrique. Le document US 2017/365887 décrit un bloc-batterie secondaire comprenant un module de batterie muni de cellules.

Cependant, une telle barre de liaison électrique n'apporte pas entière satisfaction, notamment en raison de ses dimensions. Un inconvénient inhérent à la barre de liaison électrique est qu'elle augmente l'encombrement et le poids des modules de batterie, en outre de son coût de fabrication en raison de la quantité de matière utilisée. Il a également été observé que la soudure entre la barre de liaison électrique et les languettes de connexion électrique présente fréquemment une fragilité, la rendant sujette à la fissuration.

Un objet de la présente invention est d'assurer des liaisons électriques fiables entre les bornes de connexion des cellules électrochimiques d'un module de batterie ou d'une batterie électrique, tout en réduisant l'encombrement des modules de batterie ou des batteries électriques.

Un autre objet de la présente invention est de proposer une cellule électrochimique autorisant l'utilisation d'une barre de liaison électrique de faible largeur pour un montage en série ou en parallèle simple et peu encombrant de cellules électrochimiques.

Un autre objet de la présente invention est d'améliorer la densité énergétique des batteries électriques ou des blocs-batteries.

Un autre objet de la présente invention est d'améliorer les performances globales des véhicules hybrides ou électriques.

A cet effet, il est proposé, en premier lieu, un module de batterie comprenant:
- une première cellule électrochimique intégrant un empilement d'électrodes séparées les unes des autres par un film séparateur poreux,
- une barre de liaison électrique pour raccorder électriquement la première cellule électrochimique à une deuxième cellule électrochimique, adjacente à la première cellule électrochimique, dans ledit module de batterie, la barre de liaison électrique comportant une première face principale plane, une deuxième face principale plane opposée à la première face, reliées par au moins un premier bord latéral et un deuxième bord latéral opposé au premier bord latéral ;

la première cellule électrochimique intégrant, en outre,
un premier bord comprenant une première partie de bord en regard du premier bord latéral de la barre de liaison électrique ;
une première languette de connexion électrique dépassant dudit premier bord destinée à être connectée à la première face principale de la barre de liaison électrique, cette première languette de connexion électrique ayant une longueur variable le long de la première partie de bord, cette longueur étant mesurée perpendiculairement à la première partie de bord ;
la première languette s'étendant, lorsqu'elle est connectée à la première face principale de la barre de liaison électrique, au-delà de la mi-largeur de cette barre de liaison électrique le long d'au moins une portion de la première partie de bord, la mi-largeur de la barre de liaison électrique étant mesurée dans une direction perpendiculaire auxdits premier bord latéral et deuxième bord latéral.

Diverses caractéristiques supplémentaires peuvent être prévues, seules ou en combinaison :
- la première languette de la première cellule électrochimique est fabriquée dans un premier matériau comprenant un premier métal, la barre de liaison électrique étant fabriquée dans un deuxième matériau comprenant le premier métal ;
- le premier métal est prédominant dans le premier matériau et dans le deuxième matériau ;
- la première languette de connexion électrique comprend une section de forme sensiblement rectangulaire ou triangulaire ;
- l'empilement d'électrodes est agencé dans un sachet flexible, la première cellule électrochimique comprenant en outre un électrolyte dans le sachet ;
- la première cellule électrochimique comprend un deuxième bord opposé au premier bord;
   une deuxième languette de connexion électrique dépassant dudit deuxième bord, cette deuxième languette étant sensiblement symétrique à la première languette par rapport à un plan médian de la première cellule électrochimique sensiblement perpendiculaire à l'empilement d'électrodes ou par rapport à un axe central de la première cellule électrochimique sensiblement perpendiculaire à l'empilement d'électrodes ;
- le module de batterie comprend, en outre,
   une deuxième cellule électrochimique adjacente à la première cellule électrochimique dans ledit module de batterie, cette deuxième cellule électrochimique intégrant
   un empilement d'électrodes séparées les unes des autres par un film séparateur poreux,
   un troisième bord comprenant une troisième partie de bord en regard du deuxième bord latéral de la barre de liaison électrique ; une troisième languette de connexion électrique dépassant dudit troisième bord destinée à être connectée à la première face principale de la barre de liaison électrique;
   la troisième languette s'étendant, lorsqu'elle est connectée à la première face principale de la barre de liaison électrique, au-delà de la mi-largeur de cette barre de liaison électrique le long d'au moins une portion de la troisième partie de bord ;
- un premier cordon de soudure au laser dans une zone de non-chevauchement de la première languette et de la troisième languette de façon à souder la languette correspondant à cette zone à la barre de liaison électrique ;
- le module de batterie comprend, en outre,
   un deuxième cordon de soudure au laser dans une zone de chevauchement entre la première languette et la troisième languette, de façon à souder la première languette à la troisième languette ;
- la barre de liaison électrique est de forme sensiblement plate.

Il est proposé, en deuxième lieu, un bloc-batterie intégrant une pluralité des modules de batterie présentés ci-dessus.

Il est proposé, en troisième lieu, une batterie électrique comprenant:
- une première cellule électrochimique intégrant un empilement d'électrodes séparées les unes des autres par un film séparateur poreux,
- une barre de liaison électrique pour raccorder électriquement la première cellule électrochimique à une deuxième cellule électrochimique, adjacente à la première cellule électrochimique, dans ladite batterie électrique, la barre de liaison électrique comportant une première face principale plane, une deuxième face principale plane opposée à la première face, reliées par au moins un premier bord latéral et un deuxième bord latéral opposé au premier bord latéral ;

la première cellule électrochimique intégrant, en outre,
un premier bord comprenant une première partie de bord en regard du premier bord latéral de la barre de liaison électrique ;
une première languette de connexion électrique dépassant dudit premier bord destinée à être connectée à la première face principale de la barre de liaison électrique, cette première languette de connexion électrique ayant une longueur variable le long de la première partie de bord, cette longueur étant mesurée perpendiculairement à la première partie de bord ;
la première languette s'étendant, lorsqu'elle est connectée à la première face principale de la barre de liaison électrique, au-delà de la mi-largeur de cette barre de liaison électrique le long d'au moins une portion de la première partie de bord, la mi-largeur de la barre de liaison électrique étant mesurée dans une direction perpendiculaire auxdits premier bord latéral et deuxième bord latéral.

Diverses caractéristiques supplémentaires peuvent être prévues, seules ou en combinaison :
- la première languette de la première cellule électrochimique est fabriquée dans un premier matériau comprenant un premier métal, la barre de liaison électrique étant fabriquée dans un deuxième matériau comprenant le premier métal ;
- le premier métal est prédominant dans le premier matériau et dans le deuxième matériau ;
- la première languette de connexion électrique comprend une section de forme sensiblement rectangulaire ou triangulaire ;
- l'empilement d'électrodes est agencé dans un sachet flexible, la première cellule électrochimique comprenant en outre un électrolyte dans le sachet ;
- la première cellule électrochimique comprend un deuxième bord opposé au premier bord;
   une deuxième languette de connexion électrique dépassant dudit deuxième bord, cette deuxième languette étant sensiblement symétrique à la première languette par rapport à un plan médian de la première cellule électrochimique sensiblement perpendiculaire à l'empilement d'électrodes ou par rapport à un axe central de la première cellule électrochimique sensiblement perpendiculaire à l'empilement d'électrodes ;
- la batterie électrique comprend, en outre,
   une deuxième cellule électrochimique adjacente à la première cellule électrochimique dans ladite batterie électrique, cette deuxième cellule électrochimique intégrant un empilement d'électrodes séparées les unes des autres par un film séparateur poreux,
   un troisième bord comprenant une troisième partie de bord en regard du deuxième bord latéral de la barre de liaison électrique ;
   une troisième languette de connexion électrique dépassant dudit troisième bord destinée à être connectée à la première face principale de la barre de liaison électrique;
   la troisième languette s'étendant, lorsqu'elle est connectée à la première face principale de la barre de liaison électrique, au-delà de la mi-largeur de cette barre de liaison électrique le long d'au moins une portion de la troisième partie de bord ;
- un premier cordon de soudure au laser dans une zone de non-chevauchement de la première languette et de la troisième languette de façon à souder la languette correspondant à cette zone à la barre de liaison électrique ;
- la batterie électrique comprend, en outre,
   un deuxième cordon de soudure au laser dans une zone de chevauchement entre la première languette et la troisième languette, de façon à souder la première languette à la troisième languette ;
- la barre de liaison électrique est de forme sensiblement plate.

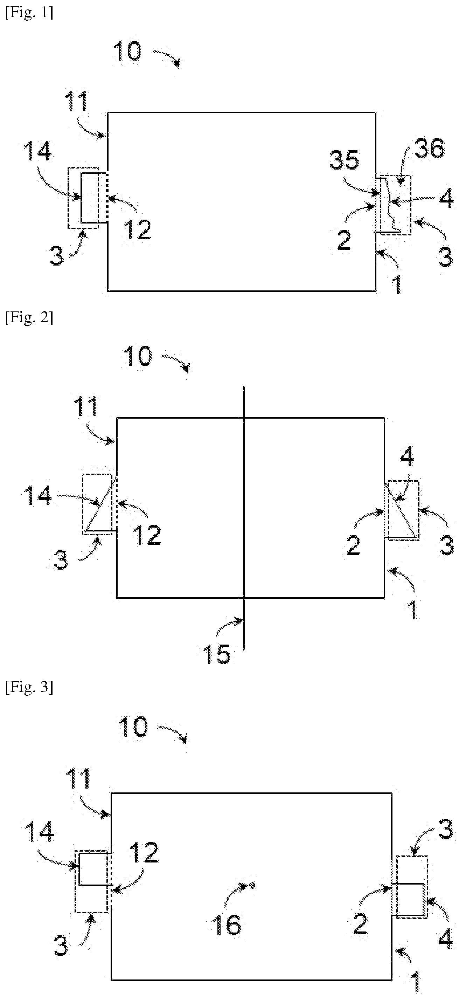

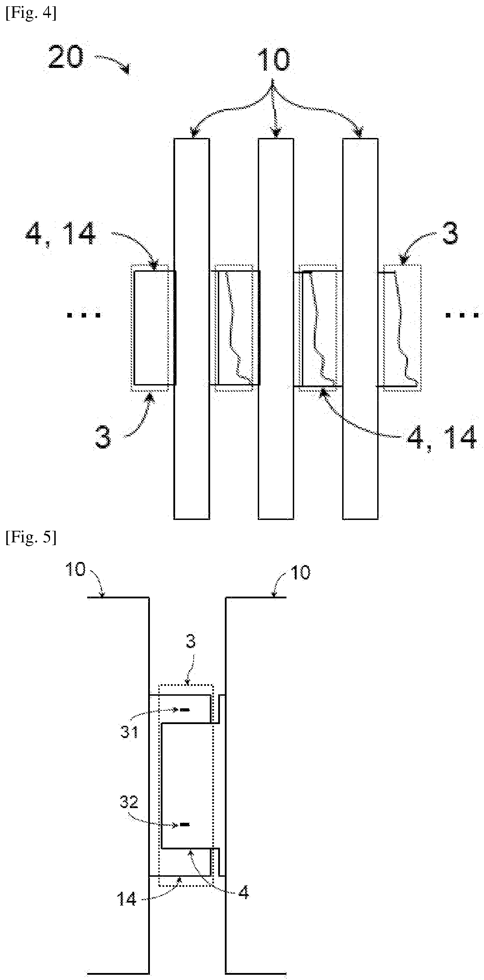

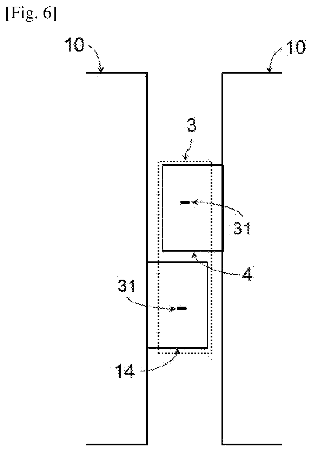

D'autres caractéristiques et avantages de l'invention apparaîtront plus clairement et de manière concrète à la lecture de la description ci-après de modes de réalisation, laquelle est faite en référence aux dessins annexés dans lesquels :
la figure [Fig.1] illustre schématiquement une cellule électrochimique intégrant des languettes de connexion électrique selon divers modes de réalisation ;
la figure [Fig.2] illustre schématiquement une cellule électrochimique intégrant des languettes de connexion électrique selon un premier mode de réalisation ;
la figure [Fig.3] illustre schématiquement une cellule électrochimique intégrant des languettes de connexion électrique selon un deuxième mode de réalisation ;
la figure [Fig.4] illustre schématiquement une partie d'un module de batterie, d'un bloc-batterie ou d'une batterie électrique selon divers modes de réalisation ;
la figure [Fig.5] illustre schématiquement une barre de liaison électrique raccordant électriquement deux cellules électrochimiques voisines dans un module de batterie, un bloc-batterie ou une batterie électrique selon un premier mode de réalisation ;
la figure [Fig.6] illustre schématiquement une barre de liaison électrique raccordant électriquement deux cellules électrochimiques voisines dans un module de batterie, un bloc-batterie ou une batterie électrique selon un deuxième mode de réalisation.

En se référant aux figures 1-3, il est affiché une cellule **10** électrochimique destinée à être intégrée dans un dispositif **20,** notamment un module **20** de batterie, un bloc-batterie **20** ou une batterie électrique **20.** Cette cellule **10** électrochimique intègre un empilement d'électrodes séparées les unes des autres par un film séparateur poreux. L'empilement d'électrodes est agencé (ou enveloppé) dans un sachet flexible comprenant un électrolyte. La cellule **10** électrochimique peut, en effet, être une cellule en sachet ou une cellule à emballage souple, communément appelée « Pouch».

La cellule **10** électrochimique comprend un premier bord **1.** Ce premier bord **1** fait référence à une zone extérieure ou une région périphérique qui délimite au moins partiellement l'empilement d'électrodes. Une première partie **2** du premier bord **1** est destinée à être en regard d'un premier bord latéral **35** d'une barre **3** de liaison électrique pour raccorder électriquement la cellule **10** électrochimique à une cellule **10** électrochimique qui lui est adjacente dans le module **20** de batterie, le bloc-batterie **20** ou la batterie électrique **20.**

Un ou plusieurs logements ou, plus généralement, une ou plusieurs structures de support sont, le plus souvent, prévus dans le module **20** de batterie, le block-batterie **20** ou la batterie électrique **20** pour recevoir la cellule **10** électrochimique de sorte que la première partie **2** de bord soit en regard du premier bord latéral **35** de la barre **3** de liaison électrique. On entend, ici, par le terme « en regard » que la première partie **2** de bord est la portion du premier bord **1** la plus proche de la barre **3** de liaison électrique, lorsque la cellule **10** électrochimique est disposée dans le module **20** de batterie, le bloc-batterie **20** ou la batterie électrique **20.** Dans un mode de réalisation, la première partie **2** de bord a une longueur sensiblement égale ou légèrement inférieure à la longueur du premier bord latéral **35** de la barre **3** de liaison électrique, ces deux longueurs étant mesurées dans la direction du premier bord **1** de la cellule **10** électrochimique.

La cellule **10** électrochimique comprend, en outre, une première languette **4** de connexion électrique d'une première polarité. Cette première languette **4** forme, par exemple, la borne de connexion électrique positive ou négative de la cellule **10** électrochimique. La première languette **4** de connexion électrique dépasse ou s'étend en saillie du premier bord **1.** La première languette **4** de connexion électrique est destinée à être connectée à une première face principale plane **36** de la barre **3** de liaison électrique.

La première languette **4** de connexion électrique a une longueur (ou une profondeur) variable ou différente le long de la première partie **2** de bord. « Variable » ou « différente » indique que cette longueur n'est pas constante, tel qu'il est, notamment, mis en exergue à la figure 1. Cette longueur est mesurée perpendiculairement à la première partie **2** de bord. Autrement dit, la première languette **4** a, le long de la première partie **2** de bord, une étendue variable dans une direction sensiblement perpendiculaire à la première partie **2** de bord.

La longueur de la première languette **4** de connexion électrique le long de la première partie **2** de bord se rapporte à sa dimension qui s'étend au-delà de la première partie **2** de bord. La longueur de la première languette **4** varie le long de la première partie **2** de bord. Plus généralement, la première languette **4** de connexion électrique n'est pas uniformément longue le long de la première partie **2** de bord.

Une languette ayant une longueur variable ou différente le long de la première partie **2** de bord signifie que la distance de la languette mesurée perpendiculairement à la première partie **2** de bord varie en différents points le long de cette première partie **2** de bord. En d'autres termes, la première languette **4** de connexion électrique n'a pas une profondeur uniforme mais présente des variations en longueur le long de la première partie **2** de bord.

Avantageusement, la première languette **4** de connexion électrique peut avoir une longueur nulle à certains points de la première partie **2** de bord, tel qu'il est illustré par la figure 3. Par exemple, la première languette **4** de connexion électrique longe partiellement la première partie **2** de bord, la longueur de la première languette **4** de connexion électrique étant nulle sur au moins une portion de la première partie **2** de bord. En ayant une longueur différente le long de la première partie **2** de bord, le contour de la première languette **4** de connexion électrique varie en créant, par exemple, une forme triangulaire, une forme en L, une forme en pointe (une languette plus longue au centre et rétrécie vers les extrémités, comme dans l'exemple de la figure 5), une forme rectangulaire comportant au moins une encoche (une découpe ou une échancrure), ou une combinaison de ces formes.

Dans des modes de réalisation illustrés par les figures 2 et 3, la première languette **4** de connexion électrique comprend une section de forme sensiblement rectangulaire ou triangulaire.

Avantageusement, des cellules **10** électrochimiques intégrant chacune une première languette 4 de connexion électrique de longueur variable le long de la première partie **2** de bord correspondante permettent de disposer, au niveau d'une barre **3** de liaison électrique, des languettes **4, 14** de connexion électrique de formes complémentaires (c.à.d. dont la combinaison crée une forme géométrique complète et uniforme, en l'occurrence, un rectangle.) ou partiellement chevauchantes. Tel qu'il sera détaillé ci-après, de telles dispositions des languettes **4, 14** de connexion électrique au niveau des barres **3** de liaison électrique permettent, avantageusement, d'utiliser des barres **3** de liaison électrique peu encombrantes (notamment, moins larges, cette largeur étant mesurée dans une direction perpendiculaire au premier bord latéral **35** de la barre **3** de liaison électrique). De telles dispositions des languettes **4, 14** de connexion électrique permettent, en outre, d'éviter un mélange intermétallique susceptible de se produire lors d'un soudage simultané des deux languettes **4, 14** de connexion électrique et de la barre **3** de liaison électrique qui peut compromettre la qualité de liaison électrique et mécanique entre les cellules **10** électrochimiques.

Dans un mode de réalisation, la cellule **10** électrochimique comprend un deuxième bord **11** opposé au premier bord **1** intégrant une deuxième partie **12** de bord destinée à être en regard d'un bord latéral d'une deuxième barre **3** de liaison électrique pour raccorder électriquement la cellule **10** électrochimique à une autre cellule électrochimique qui lui est adjacente. Une deuxième languette **14** de connexion électrique d'une deuxième polarité opposée à la première polarité dépasse du deuxième bord **11.** Cette deuxième languette **14** de connexion électrique est destinée à être connectée à une deuxième barre **3** de liaison électrique. La première languette **4** et la deuxième languette **14** de connexion électrique s'étendent en saillie dans le plan de la cellule **10** électrochimique.

Dans le mode de réalisation illustré par la figure 1, la première languette **4** présente une première surface et la deuxième languette **14** présente une deuxième surface différente de la première surface. Autrement dit, la cellule **10** électrochimique comprend une première languette **4** et une deuxième languette **14** formant deux bornes de connexion électrique de polarité opposée, les deux languettes **4, 14** ayant des surfaces différentes. Il s'ensuit que, lorsqu'elles sont superposées, l'une des deux languettes **4, 14** de connexion électrique couvre partiellement l'autre. En d'autres termes, lorsque la première languette **4** et la deuxième languette **14** sont superposées, elles se chevauchent partiellement, et non pas complètement. Deux languettes **4, 14** de même surface, partiellement chevauchantes lorsqu'elles sont superposées sur une même première face principale plane **36** de la barre **3** de liaison électrique (notamment, lorsqu'elles sont de formes différentes ou se présentent différemment sur la barre **3** de liaison électrique), peuvent également être envisagées.

Dans un autre mode de réalisation illustré par la figure 2, la deuxième languette **14** de connexion électrique est sensiblement symétrique à la première languette **4** par rapport à un plan **15** médian de la cellule **10** électrochimique. Le plan **15** médian est sensiblement perpendiculaire à l'empilement d'électrodes. Une telle disposition des languettes **4, 14** de connexion électrique peut, avantageusement, être envisagée pour un montage en série des cellules **10** électrochimiques.

Dans un autre mode de réalisation illustré par la figure 3, la deuxième languette **14** de connexion électrique est sensiblement symétrique à la première languette **4** de connexion électrique par rapport à un axe **16** central de la cellule électrochimique. L'axe **16** central est sensiblement perpendiculaire à l'empilement d'électrodes. Une telle disposition des languettes **4, 14** de connexion électrique peut, avantageusement, être envisagée pour un montage en parallèle des cellules **10** électrochimiques.

En se reportant à la figure 4, il est affiché une partie d'un dispositif **20** (notamment, un module **20** de batterie, un bloc-batterie **20** ou une batterie électrique **20**) comprenant une pluralité de cellules **10** électrochimiques disposées en rangée (l'une à côté de l'autre selon une direction de connexion) et dont les languettes **4, 14** de connexion électrique sont reliées électriquement entre elles au moyen de barres **3** de liaison électrique. Les cellules **10** électrochimiques sont agencées dans le dispositif **20** de sorte que leurs languettes **4, 14** de connexion électrique puissent être raccordées électriquement les unes aux autres dans un montage en série ou en parallèle à l'aide des barres **3** de liaison électrique par soudage au laser.

La barre **3** de liaison électrique comprend un corps allongé en un matériau électriquement conducteur (notamment, en cuivre, en aluminium ou dans un alliage de ces derniers) qui s'étend entre deux cellules **10** électrochimiques adjacentes. La barre **3** de liaison électrique comporte une première face principale plane **36** et une deuxième face principale plane opposée à la première face plane **36,** reliées par au moins un premier bord latéral **35** et un deuxième bord latéral opposé au premier bord latéral **35.** Les deux faces principales planes correspondent aux surfaces les plus étendues de la barre **3** de liaison électrique, par opposition aux bords latéraux, constitués des arêtes longitudinales et transversales. Chaque barre **3** de liaison électrique permet de mettre en contact électrique les languettes **4, 14** de connexion électrique de deux cellules **10** électrochimiques successives dans le module **20** de batterie, le bloc-batterie **20** ou la batterie électrique **20.** Dans un mode de réalisation avantageux, la barre.**3** de liaison électrique est de forme sensiblement plate, définie par les deux faces principales opposées - la première face principale **36** et la deuxième face principale qui lui est opposée - qui délimitent une faible épaisseur, la barre **3** de liaison électrique s'étendant principalement selon un plan longitudinal. Une telle configuration permet avantageusement de réduire l'encombrement, le poids, la consommation de matière première ainsi que le nombre d'étapes de fabrication.

Dans un mode de réalisation, au moins l'une des deux languettes **4, 14** de connexion électrique s'étend, lorsqu'elle est connectée à la barre 3 de liaison électrique, au-delà de la mi-largeur (ou demi-largeur) de la barre **3** de liaison électrique le long d'au moins une portion de la première partie **2** de bord. La mi-largeur de la barre **3** de liaison électrique est mesurée dans une direction perpendiculaire à son premier bord latéral **35** et à son deuxième bord latéral opposée au premier bord latéral **35.** Ainsi, un chevauchement partiel ou une complémentarité géométrique de deux languettes **4, 14** peuvent, avantageusement, être obtenus au niveau de la barre 3 de la liaison électrique. Des languettes **4, 14** complémentaires ou partiellement chevauchantes permettent, avantageusement, d'utiliser une barre **3** de liaison électrique peu encombrante et d'améliorer la qualité de soudure de ces languettes **4, 14** à la barre **3** de liaison électrique.

Tel qu'il est illustré par les figures 5-6, les languettes **4, 14** de connexion électrique de deux cellules **10** électrochimiques adjacentes dans un module **20** de batterie, un bloc-batterie **20** ou une batterie électrique **20** sont pliées sur une même face principale plane de la barre **3** de liaison électrique. Au moins l'une de deux languettes **4, 14** de connexion électrique présente une longueur variable le long de la partie de bord correspondante. Dans l'exemple illustré à la figure 5, seule la languette **4** de connexion électrique présente une telle variation de longueur. Dans l'exemple de la figure 6, les deux languettes **4, 14** de connexion électrique présentent respectivement une longueur variable le long de leur partie de bord correspondante. Chacune des deux languettes **4, 14** de connexion électrique s'étend, lorsqu'elle est connectée à ladite même face principale de la barre **3** de liaison électrique, au-delà de la mi-largeur de cette barre **3** de liaison électrique le long d'au moins une portion de la partie de bord correspondante. Avantageusement, en raison de la forme de l'une de deux languettes **4, 14** de connexion électrique ou des deux languettes **4, 14** de connexion électrique et de leur disposition sur la barre 3 de liaison électrique, une zone de l'une des deux languettes **4, 14** de connexion électrique peut être non recouverte par l'autre languette **4, 14** de connexion électrique. Autrement dit, il existe une zone de non-chevauchement entre les deux languettes **4, 14** pliées sur la barre **3** de connexion électrique.

Pour fixer les languettes **4, 14** de connexion électrique à la barre **3** de liaison électrique, un premier cordon **31** (un point ou une ligne) de soudure au laser est appliqué dans une zone de non-chevauchement des deux languettes **4, 14** (une zone où les deux languettes ne se chevauchent pas) de façon à souder la languette correspondant à cette zone à la barre **3** de liaison électrique. Dans l'exemple de la figure 5, la zone de non-chevauchement est une zone de la languette **14** de connexion électrique non recouverte par la languette **4** de connexion électrique. Dans ce cas, le cordon **31** de soudure permet de souder la languette **14** de connexion électrique à la barre **3** de liaison électrique.

Dans un mode de réalisation, une languette **4, 14** de la première cellule **10** électrochimique est fabriquée dans un premier matériau comprenant un premier métal. La barre **3** de liaison électrique est fabriquée dans un deuxième matériau comprenant le premier métal. Autrement dit, une languette **4, 14** et la barre **3** de liaison électrique présentent un métal en commun ou contiennent toutes les deux un même métal dans leur composition. Ce métal en commun permet, avantageusement, d'assurer une meilleure compatibilité entre le matériau de la languette **4, 14** et le matériau de la barre **3** de liaison électrique conduisant à une meilleure intégrité structurelle de la soudure. Il en résulte, avantageusement, une réduction des risques de fissuration ou de défauts de soudure et, par conséquent, un premier cordon **31** de soudure plus robuste et fiable.

Dans un mode de réalisation, le métal en commun est prédominant dans le matériau de la languette **4, 14** et dans le matériau de la barre **3** de liaison électrique. On entend par « métal prédominant dans un matériau » un composé qui représente la plus grande quantité en poids parmi les composés du matériau, autrement dit le composé constituant la composante principale ou la plus abondante du matériau en question. Par exemple, la première languette **4** et la barre **3** de liaison électrique sont à base d'aluminium ou de cuivre avec, respectivement, un premier niveau de pureté et un deuxième niveau de pureté différents. Dans ce cas, la languette **4** et la barre **3** de liaison électrique présentent des propriétés similaires de fusion et de dilatation thermique favorisant la réalisation d'un premier cordon **31** de soudure au laser robuste, fiable et sans risques de défaut de soudure et/ou de fissuration susceptibles de se produire lors de la soudure d'éléments ayant des propriétés différentes de fusion et/ou de dilatation thermique.

A titre avantageux, un métal en commun prédominant dans le matériau de la languette **4, 14** et dans le matériau de la barre **3** de liaison électrique permet de réaliser une soudure homogène et solide capable de résister aux vibrations du véhicule automobile. Il en résulte, avantageusement, une liaison mécanique stable et solide entre la languette **4, 14** et la barre **3** de liaison électrique. L'application du premier cordon **31** de soudure avec une puissance laser convenable pour souder la languette **4, 14** à la barre **3** de liaison électrique permet, comparée à une soudure à la fois à la première languette **4,** la deuxième languette **14** et la barre **3** de liaison électrique, de les assembler efficacement sans risque de créer un éventuel mélange de matériaux différents.

Plus généralement, l'application d'un premier cordon **31** de soudure dans la zone de non-chevauchement d'une languette **4, 14** pour la fixer à la barre **3** de liaison électrique apporte une stabilité mécanique à la liaison entre les cellules électrochimiques et les barres **3** de liaison électrique, notamment face aux vibrations du véhicule. S'agissant de deux éléments métalliques, une telle soudure permet, bien entendu, aussi une connexion électrique entre la languette **4, 14** et la barre **3** de liaison électrique.

Dans le cas d'un chevauchement partiel entre les deux languettes **4, 14** pliées sur la barre **3** de liaison électrique (voir figure 5), un deuxième cordon **32** de soudure au laser peut être appliqué dans une zone de chevauchement (où la languette **4** est recouverte par la languette **14** ou inversement) pour souder les deux languettes **4, 14,** l'une à l'autre. Plus généralement, le dispositif **20** comprend, dans un mode de réalisation, un deuxième cordon **32** de soudure au laser dans une zone de chevauchement entre les deux languettes **4, 14** de façon à les souder l'une à l'autre.

Il convient de noter que chacun du premier cordon **31** de soudure et du deuxième cordon **32** de soudure ne nécessite pas autant d'énergie de soudure que pour souder à la fois les deux languettes **4, 14** et la barre **3** de liaison électrique. Un apport de trop d'énergie à la soudure peut, ainsi, être évité.

A titre avantageux, les modes de réalisation présentés ci-dessus permettent d'éviter un mélange intermétallique susceptible de se produire lors d'un soudage à la fois de la deuxième languette **14,** la première languette **4** et la barre **3** de liaison électrique et qui peut compromettre la qualité de liaison électrique et mécanique entre les cellules **10** électrochimiques. Les cordons **31, 32** de soudure permettent de fixer solidement les cellules **10** électrochimique à la barre **3** de liaison électrique et de les connecter électriquement.

Par ailleurs, le besoin d'une barre **3** de liaison électrique suffisamment large pour recevoir de chaque côté et sans chevauchement des languettes **4, 14** n'est, avantageusement, plus requis. Il en résulte un encombrement moindre des modules **20** de batterie (respectivement, des blocs-batteries **20** ou des batteries électriques **20**) de sorte qu'une augmentation du nombre des cellules **10** électrochimiques par module**20** de batterie (respectivement, par bloc-batterie **20** ou par batterie électrique **20**) peut être envisagée pour améliorer la puissance globale du véhicule.

## Revendications

1. Module **(20)** de batterie comprenant:
- une première cellule **(10)** électrochimique intégrant un empilement d'électrodes séparées les unes des autres par un film séparateur poreux,
- une barre **(3)** de liaison électrique pour raccorder électriquement la première cellule **(10)** électrochimique à une deuxième cellule **(10)** électrochimique, adjacente à la première cellule **(10)** électrochimique, dans ledit module **(20)** de batterie, la barre **(3)** de liaison électrique comportant une première face principale plane, une deuxième face principale plane opposée à la première face, reliées par au moins un premier bord latéral et un deuxième bord latéral opposé au premier bord latéral ;
la première cellule **(10)** électrochimique intégrant, en outre, un premier bord **(1)** comprenant une première partie **(2)** de bord en regard du premier bord latéral de la barre **(3)** de liaison électrique ;
- une première languette **(4)** de connexion électrique dépassant dudit premier bord **(1)** destinée à être connectée à la première face principale de la barre **(3)** de liaison électrique, cette première languette **(4)** de connexion électrique ayant une longueur variable le long de la première partie **(2)** de bord, cette longueur étant mesurée perpendiculairement à la première partie **(2)** de bord ;
la première languette **(4)** s'étendant, lorsqu'elle est connectée à la première face principale de la barre **(3)** de liaison électrique, au-delà de la mi-largeur de cette barre **(3)** de liaison électrique le long d'au moins une portion de la première partie **(2)** de bord, la mi-largeur de la barre **(3)** de liaison électrique étant mesurée dans une direction perpendiculaire auxdits premier bord latéral et deuxième bord latéral.

2. Module de batterie selon la revendication précédente, **caractérisé en ce que** la première languette **(4)** de la première cellule **(10)** électrochimique est fabriquée dans un premier matériau comprenant un premier métal, la barre **(3)** de liaison électrique étant fabriquée dans un deuxième matériau comprenant le premier métal.

3. Module de batterie selon la revendication précédente, **caractérisé en ce que** le premier métal est prédominant dans le premier matériau et dans le deuxième matériau.

4. Module de batterie selon l'une quelconque des revendications précédentes, **caractérisé en ce que** la première languette **(4)** de connexion électrique comprend une section de forme sensiblement rectangulaire ou triangulaire.

5. Module de batterie selon l'une quelconque des revendications précédentes, **caractérisé en ce que** l'empilement d'électrodes est agencé dans un sachet flexible, la première cellule (4) électrochimique comprenant en outre un électrolyte dans le sachet.

6. Module de batterie selon l'une quelconque des revendications précédentes, **caractérisé en ce que** la première cellule électrochimique comprend
- un deuxième bord **(11)** opposé au premier bord **(1);**
- une deuxième languette **(14)** de connexion électrique dépassant dudit deuxième bord **(11),** cette deuxième languette **(14)** étant sensiblement symétrique à la première languette **(4)** par rapport à un plan **(15)** médian de la première cellule **(10)** électrochimique sensiblement perpendiculaire à l'empilement d'électrodes ou par rapport à un axe **(16)** central de la première cellule **(10)** électrochimique sensiblement perpendiculaire à l'empilement d'électrodes.

7. Module de batterie selon l'une quelconque des revendications précédentes , **caractérisé en ce qu'**il comprend, en outre,
- une deuxième cellule **(10)** électrochimique adjacente à la première cellule électrochimique dans ledit module de batterie, cette deuxième cellule **(10)** électrochimique intégrant
un empilement d'électrodes séparées les unes des autres par un film séparateur poreux,
un troisième bord **(1)** comprenant une troisième partie **(2)** de bord en regard du deuxième bord latéral de la barre **(3)** de liaison électrique ; une troisième languette **(4)** de connexion électrique dépassant dudit troisième bord **(1)** destinée à être connectée à la première face principale de la barre **(3)** de liaison électrique,
la troisième languette **(4)** s'étendant, lorsqu'elle est connectée à la première face principale de la barre **(3)** de liaison électrique, au-delà de la mi-largeur de cette barre **(3)** de liaison électrique le long d'au moins une portion de la troisième partie **(2)** de bord ;
- un premier cordon **(31)** de soudure au laser dans une zone de non-chevauchement de la première languette et de la troisième languette de façon à souder la languette correspondant à cette zone à la barre (3) de liaison électrique.

8. Module de batterie selon la revendication précédente, **caractérisé en ce qu'**il comprend, en outre,
un deuxième cordon **(32)** de soudure au laser dans une zone de chevauchement entre la première languette et la troisième languette, de façon à souder la première languette à la troisième languette.

9. Module de batterie selon l'une quelconque des revendications précédentes, **caractérisé en ce que** la barre de liaison électrique est de forme sensiblement plate.

10. Bloc-batterie intégrant une pluralité de modules **(20)** de batterie selon l'une quelconque des revendications précédentes.

11. Batterie électrique **(20)** comprenant:
- une première cellule **(10)** électrochimique intégrant un empilement d'électrodes séparées les unes des autres par un film séparateur poreux,
- une barre **(3)** de liaison électrique pour raccorder électriquement la première cellule **(10)** électrochimique à une deuxième cellule **(10)** électrochimique, adjacente à la première cellule **(10)** électrochimique, dans ladite batterie électrique **(20),** la barre **(3)** de liaison électrique comportant une première face principale plane, une deuxième face principale plane opposée à la première face, reliées par au moins un premier bord latéral et un deuxième bord latéral opposé au premier bord latéral ;
la première cellule **(10)** électrochimique intégrant, en outre,
un premier bord **(1)** comprenant une première partie **(2)** de bord en regard du premier bord latéral de la barre **(3)** de liaison électrique ;
- une première languette **(4)** de connexion électrique dépassant dudit premier bord **(1)** destinée à être connectée à la première face principale de la barre **(3)** de liaison électrique, cette première languette **(4)** de connexion électrique ayant une longueur variable le long de la première partie **(2)** de bord, cette longueur étant mesurée perpendiculairement à la première partie **(2)** de bord ;
la première languette **(4)** s'étendant, lorsqu'elle est connectée à la première face principale de la barre **(3)** de liaison électrique, au-delà de la mi-largeur de cette barre **(3)** de liaison électrique le long d'au moins une portion de la première partie **(2)** de bord, la mi-largeur de la barre **(3)** de liaison électrique étant mesurée dans une direction perpendiculaire auxdits premier bord latéral et deuxième bord latéral.

12. Batterie électrique **(20)** selon la revendication précédente, **caractérisée en ce que** la première languette **(4)** de la première cellule **(10)** électrochimique est fabriquée dans un premier matériau comprenant un premier métal, la barre **(3)** de liaison électrique étant fabriquée dans un deuxième matériau comprenant le premier métal.

13. Batterie électrique **(20)** selon la revendication précédente, **caractérisée en ce que** le premier métal est prédominant dans le premier matériau et dans le deuxième matériau.

14. Batterie électrique **(20)** selon l'une quelconque des revendications 11 à 13, **caractérisée en ce que** la première languette **(4)** de connexion électrique comprend une section de forme sensiblement rectangulaire ou triangulaire.

15. Batterie électrique **(20)** selon l'une quelconque des revendications 11 à 14, **caractérisée en ce que** l'empilement d'électrodes est agencé dans un sachet flexible, la première cellule (4) électrochimique comprenant en outre un électrolyte dans le sachet.

## Patentansprüche

1. Batteriemodul (**20**), umfassend:
- eine erste elektrochemische Zelle (**10**), die einen Stapel von Elektroden integriert, die durch eine poröse Trennfolie voneinander getrennt sind,
- eine elektrische Verbindungsschiene (**3**) zum elektrischen Anbinden der ersten elektrochemischen Zelle (**10**) an eine zweite elektrochemische Zelle (**10**), die an die erste elektrochemische Zelle (**10**) angrenzt, in dem Batteriemodul (**20**), wobei die elektrische Verbindungsschiene (**3**) eine erste ebene Hauptfläche, eine zweite ebene Hauptfläche, die der ersten Fläche gegenüberliegt, aufweist, die durch mindestens einen ersten Seitenrand und einen zweiten Seitenrand, der dem ersten Seitenrand gegenüberliegt, verbunden sind;
wobei die erste elektrochemische Zelle (**10**) ferner einen ersten Rand (**1**) integriert, umfassend einen ersten Randabschnitt (**2**), der dem ersten Seitenrand der elektrischen Verbindungsschiene (**3**) gegenüberliegt;
- eine erste elektrische Anschlusslasche (**4**), die von dem ersten Rand (**1**) hervorsteht, die dazu bestimmt ist, an die erste Hauptfläche der elektrischen Verbindungsschiene (**3**) angeschlossen zu werden, wobei diese erste elektrische Anschlusslasche (**4**) eine Länge aufweist, die entlang des ersten Randabschnitts (**2**) variabel ist, wobei diese Länge senkrecht zu dem ersten Randabschnitt (**2**) gemessen wird;
wobei sich die erste Lasche (**4**), wenn sie an die erste Hauptfläche der elektrischen Verbindungsschiene (**3**) angeschlossen ist, über die halbe Breite der elektrischen Verbindungsschiene (**3**) hinaus entlang mindestens eines Abschnitts des ersten Randteils (**2**) erstreckt, wobei die halbe Breite der elektrischen Verbindungsschiene (**3**) in einer Richtung senkrecht zu dem ersten Seitenrand und dem zweiten Seitenrand gemessen wird.

2. Batteriemodul nach dem vorstehenden Anspruch,
**dadurch gekennzeichnet, dass** die erste Lasche (**4**) der ersten elektrochemischen Zelle (**10**) aus einem ersten Material hergestellt ist, umfassend ein erstes Metall, wobei die elektrische Verbindungsschiene (**3**) aus einem zweiten Material hergestellt ist, umfassend das erste Metall.

3. Batteriemodul nach dem vorstehenden Anspruch,
**dadurch gekennzeichnet, dass** das erste Metall in dem ersten Material und in dem zweiten Material vorherrschend ist.

4. Batteriemodul nach einem der vorstehenden Ansprüche,
**dadurch gekennzeichnet, dass** die erste elektrische Anschlusslasche (**4**) einen Bereich mit im Wesentlichen rechteckiger oder dreieckiger Form umfasst.

5. Batteriemodul nach einem der vorstehenden Ansprüche,
**dadurch gekennzeichnet, dass** der Stapel von Elektroden in einem flexiblen Beutel angeordnet ist, die erste elektrochemische Zelle (4) ferner umfassend einen Elektrolyten in dem Beutel.

6. Batteriemodul nach einem der vorstehenden Ansprüche,
**dadurch gekennzeichnet, dass** die erste elektrochemische Zelle umfasst
- einen zweiten Rand (**11**), der dem ersten Rand (**1**) gegenüberliegt;
- eine zweite elektrische Anschlusslasche (**14**), die von dem zweiten Rand (**11**) hervorsteht, wobei diese zweite Lasche (**14**) im Wesentlichen symmetrisch zu der ersten Lasche (**4**) bezüglich einer mittleren Ebene (**15**) der ersten elektrochemischen Zelle (**10**), die im Wesentlichen senkrecht zu dem Stapel von Elektroden ist, oder bezüglich einer zentralen Achse (**16**) der ersten elektrochemischen Zelle (**10**) ist, die im Wesentlichen senkrecht zu dem Stapel von Elektroden ist.

7. Batteriemodul nach einem der vorstehenden Ansprüche,
**dadurch gekennzeichnet, dass es** ferner umfasst,
- eine zweite elektrochemische Zelle (**10**), die an die erste elektrochemische Zelle in dem Batteriemodul angrenzt, wobei diese zweite elektrochemische Zelle (**10**) integriert
einen Stapel von Elektroden, die voneinander durch einen porösen Trennfilm getrennt sind,
einen dritten Rand (**1**), der einen dritten Randabschnitt (**2**) umfasst, der dem zweiten Seitenrand der elektrischen Verbindungsschiene (**3**) gegenüberliegt;
eine dritte elektrische Anschlusslasche (**4**), die von dem dritten Rand (**1**) hervorsteht, die dazu bestimmt ist, an die erste Hauptfläche der elektrischen Verbindungsschiene (**3**) angeschlossen zu werden;
wobei sich die dritte Lasche (**4**), wenn sie an die erste Hauptfläche der elektrischen Verbindungsschiene (**3**) angeschlossen ist, über die halbe Breite dieser elektrischen Verbindungsschiene (**3**) hinaus entlang mindestens eines Abschnitts des dritten Randteils (**2**) erstreckt;
- eine erste Laserschweißnaht (**31**) in einer Nicht-Überlappungszone der ersten Lasche und der dritten Lasche, um die Lasche, die dieser Zone entspricht, an die elektrische Verbindungsschiene (3) zu schweißen.

8. Batteriemodul nach dem vorstehenden Anspruch,
**dadurch gekennzeichnet, dass es** ferner umfasst,
eine zweite Laserschweißnaht (**32**) in einer Überlappungszone zwischen der ersten Lasche und der dritten Lasche, um die erste Lasche an die dritte Lasche zu schweißen.

9. Batteriemodul nach einem der vorstehenden Ansprüche,
**dadurch gekennzeichnet, dass** die elektrische Verbindungsschiene im Wesentlichen flach ausgebildet ist.

10. Batteriepack, der eine Vielzahl von Batteriemodulen (**20**) nach einem der vorstehenden Ansprüche integriert.

11. Elektrische Batterie (**20**) umfassend:
- eine erste elektrochemische Zelle (**10**), die einen Stapel von Elektroden integriert, die durch eine poröse Trennfolie voneinander getrennt sind,
- eine elektrische Verbindungsschiene (**3**) zum elektrischen Anbinden der ersten elektrochemischen Zelle (**10**) an eine zweite elektrochemische Zelle (**10**), die an die erste elektrochemische Zelle (**10**) in der elektrischen Batterie (**20**) angrenzt, wobei die elektrische Verbindungsschiene (**3**) eine erste ebene Hauptfläche, eine zweite ebene Hauptfläche, die der ersten Fläche gegenüberliegt, aufweist, die durch mindestens einen ersten Seitenrand und einen zweiten Seitenrand, der dem ersten Seitenrand gegenüberliegt, verbunden sind;
wobei die erste elektrochemische Zelle (**10**) ferner einen ersten Rand (**1**) integriert, umfassend einen ersten Randabschnitt (**2**), der dem ersten Seitenrand der elektrischen Verbindungsschiene (**3**) gegenüberliegt;
- eine erste elektrische Anschlusslasche (**4**), die von dem ersten Rand (**1**) hervorsteht, die dazu bestimmt ist, an die erste Hauptfläche der elektrischen Verbindungsschiene (**3**) angeschlossen zu werden, wobei diese erste elektrische Anschlusslasche (**4**) eine Länge aufweist, die entlang des ersten Randabschnitts (**2**) variabel ist, wobei diese Länge senkrecht zu dem ersten Randabschnitt (**2**) gemessen wird;
wobei sich die erste Lasche (**4**), wenn sie an die erste Hauptfläche der elektrischen Verbindungsschiene (**3**) angeschlossen ist, über die halbe Breite der elektrischen Verbindungsschiene (**3**) hinaus entlang mindestens eines Abschnitts des ersten Randteils (**2**) erstreckt, wobei die halbe Breite der elektrischen Verbindungsschiene (**3**) in einer Richtung senkrecht zu dem ersten Seitenrand und dem zweiten Seitenrand gemessen wird.

12. Elektrische Batterie (**20**) nach dem vorstehenden Anspruch,
**dadurch gekennzeichnet, dass** die erste Lasche (**4**) der ersten elektrochemischen Zelle (**10**) aus einem ersten Material hergestellt ist, umfassend ein erstes Metall, wobei die elektrische Verbindungsschiene (**3**) aus einem zweiten Material hergestellt ist, umfassend das erste Metall.

13. Elektrische Batterie (**20**) nach dem vorstehenden Anspruch,
**dadurch gekennzeichnet, dass** das erste Metall in dem ersten Material und in dem zweiten Material vorherrschend ist.

14. Elektrische Batterie (**20**) nach einem der Ansprüche 11 bis 13, **dadurch gekennzeichnet, dass** die erste elektrische Anschlusslasche (**4**) einen Bereich mit im Wesentlichen rechteckiger oder dreieckiger Form umfasst.

15. Elektrische Batterie (**20**) nach einem der Ansprüche 11 bis 14, **dadurch gekennzeichnet, dass** der Stapel von Elektroden in einem flexiblen Beutel angeordnet ist, die erste elektrochemische Zelle (4) ferner umfassend einen Elektrolyten in dem Beutel.

## Claims

1. Battery module (**20**) comprising:
- a first electrochemical cell (**10**) incorporating a stack of electrodes separated from one another by a porous separator film,
- an electrical connection bar (**3**) for electrically connecting the first electrochemical cell (**10**) to a second electrochemical cell (**10**), adjacent to the first electrochemical cell (**10**), in said battery module (**20**), the electrical connection bar (**3**) comprising a first flat main face, a second flat main face opposite the first face, joined by at least a first lateral edge and a second lateral edge opposite the first lateral edge;
the first electrochemical cell (**10**) further incorporating a first edge (**1**) comprising a first edge part (**2**) facing the first lateral edge of the electrical connection bar (**3**);
- a first electrical connection tab (**4**) projecting from said first edge (**1**) for connection to the first main face of the electrical connection bar (**3**), this first electrical connection tab (**4**) having a variable length along the first edge part (**2**), this length being measured perpendicular to the first edge part (**2**);
the first tab (**4**) extending, when connected to the first main face of the electrical connection bar (**3**), beyond the half-width of this electrical connection bar (**3**) along at least a portion of the first edge part (**2**), the half-width of the electrical connection bar (**3**) being measured in a direction perpendicular to said first lateral edge and second lateral edge.

2. Battery module according to the preceding claim, **characterized in that** the first tab (**4**) of the first electrochemical cell (**10**) is made of a first material comprising a first metal, the electrical connection bar (**3**) being made of a second material comprising the first metal.

3. Battery module according to the preceding claim, **characterized in that** the first metal is predominant in the first material and in the second material.

4. Battery module according to any of the preceding claims,
**characterized in that** the first electrical connection tab (**4**) comprises a substantially rectangular or triangular cross-section.

5. Battery module according to any of the preceding claims,
**characterized in that** the electrode stack is arranged in a flexible bag, the first electrochemical cell (4) further comprising an electrolyte in the bag.

6. Battery module according to any of the preceding claims,
**characterized in that** the first electrochemical cell comprises
- a second edge (**11**) opposite the first edge (**1**);
- a second electrical connection tab (**14**) projecting from said second edge (**11**), this second tab (**14**) being substantially symmetrical to the first tab (**4**) with respect to a median plane (**15**) of the first electrochemical cell (**10**) substantially perpendicular to the electrode stack or with respect to a central axis (**16**) of the first electrochemical cell (**10**) substantially perpendicular to the electrode stack.

7. Battery module according to any of the preceding claims,
**characterized in that** it further comprises
- a second electrochemical cell (**10**) adjacent to the first electrochemical cell in said battery module, this second electrochemical cell (**10**) incorporating
a stack of electrodes separated from each other by a porous separator film,
a third edge (**1**) comprising a third edge part (**2**) facing the second lateral edge of the electrical connection bar (**3**);
a third electrical connection tab (**4**) projecting from said third edge (**1**) for connection to the first main face of the electrical connection bar (**3**);
the third tab (**4**) extending, when connected to the first main face of the electrical connection bar (**3**), beyond the mid-width of this electrical connection bar (**3**) along at least a portion of the third edge part (**2**);
- a first laser weld bead (**31**) in a non-overlapping zone of the first tab and the third tab, so as to weld the tab corresponding to this zone to the electrical connection bar (3).

8. Battery module according to the preceding claim, **characterized in that** it further comprises
a second laser weld bead (**32**) in an overlapping zone between the first tab and the third tab, so as to weld the first tab to the third tab.

9. Battery module according to any of the preceding claims,
**characterized in that** the electrical connection bar is substantially flat in shape.

10. Battery pack incorporating a plurality of battery modules (**20**) according to any of the preceding claims.

11. Electric battery (**20**) comprising:
- a first electrochemical cell (**10**) incorporating a stack of electrodes separated from one another by a porous separator film,
- an electrical connection bar (**3**) for electrically connecting the first electrochemical cell (**10**) to a second electrochemical cell (**10**), adjacent to the first electrochemical cell (**10**), in said electric battery (**20**), the electrical connection bar (**3**) comprising a first flat main face, a second flat main face opposite the first face, joined by at least a first lateral edge and a second lateral edge opposite the first lateral edge;
the first electrochemical cell (**10**) further incorporating a first edge (**1**) comprising a first edge part (**2**) facing the first lateral edge of the electrical connection bar (**3**);
- a first electrical connection tab (**4**) projecting from said first edge (**1**) for connection to the first main face of the electrical connection bar (**3**), this first electrical connection tab (**4**) having a variable length along the first edge part (**2**), this length being measured perpendicular to the first edge part (**2**);
the first tab (**4**) extending, when connected to the first main face of the electrical connection bar (**3**), beyond the half-width of this electrical connection bar (**3**) along at least a portion of the first edge part (**2**), the half-width of the electrical connection bar (**3**) being measured in a direction perpendicular to said first lateral edge and second lateral edge.

12. Electric battery (**20**) according to the preceding claim,
**characterized in that** the first tab (**4**) of the first electrochemical cell (**10**) is made of a first material comprising a first metal, the electrical connection bar (**3**) being made of a second material comprising the first metal.

13. Electric battery (**20**) according to the preceding claim,
**characterized in that** the first metal is predominant in the first material and in the second material.

14. Electric battery (**20**) according to any of claims 11 to 13,
**characterized in that** the first electrical connection tab (**4**) comprises a substantially rectangular or triangular cross-section.

15. Electric battery (**20**) according to any of claims 11 to 14,
**characterized in that** the electrode stack is arranged in a flexible bag, the first electrochemical cell (4) further comprising an electrolyte in the bag.
